Europäisches Patentamt

European Patent Office

Office européen des brevets

(11) Publication number: **0 203 901**
**A1**

# EUROPEAN PATENT APPLICATION

(21) Application number: 86850175.0

(51) Int. Cl.⁴: **G 01 T 1/204**

(22) Date of filing: **16.05.86**

(30) Priority: **28.05.85 SE 8502614**

(71) Applicant: **Wallac Oy, P.O. Box 10, SF-20101 Turku 10 (FI)**

(43) Date of publication of application: **03.12.86**
**Bulletin 86/49**

(72) Inventor: **Oikari, Timo, Vatselantie 5 as. 9,
SF-20500 Turku (FI)**
Inventor: **Nurmi, Jarmo, Lepola, SF-21620 Kuusisto (FI)**

(84) Designated Contracting States: **DE FR GB**

(74) Representative: **Johansson, Lars E., LKB-Produkter AB
Box 305, S-161 26 Bromma (SE)**

(54) Method in liquid scintillation counting for discriminating between different kinds of detected scintillation events.

(57)     The invention relates to a method in liquid scintillation counting for discriminating between different kinds of detected scintillation events, each event producing a plurality of successive single photon and multiphoton pulses. According to the invention the number of such pulses is counted during at least one predetermined time interval within each detected scintillation event and the events are discriminated on the basis of said numbers by comparing either each number or a value determined from a function depending on this number with a plurality of predetermined ranges of numbers or function values describing said different kinds of scintillation events.

Method in liquid scintillation counting for discriminating between different kinds of detected scintillation events.

## TECHNICAL FIELD

This invention relates to a method in liquid scintillation counting for discriminating between different kinds of detected scintillation events, each event producing a plurality of successive single photon and multiphoton pulses.

## BACKGROUND ART

A liquid scintillator is normally a solution of a suitable aromatic solvent with one or more dissolved fluorescent compound called a solute or a fluor. A particle of ionizing radiation excites the solvent molecules which in turn transfer their energy to the fluors. Subsequent de-excitation of the fluor molecules results in an emission of photons, a phenomenon called scintillation.

Liquid scintillation counting is a widely used method for determining disintegration rates of several radioactive isotopes in solution. The sample under investigation is dissolved in the liquid scintillator in a counting vial. Most often, counting is carried out in that this vial is placed between two photomultiplier tubes in a light tight measuring chamber. Because each ionizing particle originating either from the sample or from the background radiation produces a flash of several photons the photomultiplier tubes are operated in coincidence, i.e. a count is registered if both photomultiplier tubes emit a pulse within a predetermined time interval, the so called coincidence resolving time, typically 5 - 50 ns, thus eliminating interfering thermal background noise in the photomultiplier tubes.

The intensity of a scintillation event as a function of time depends on the nature of the ionizing particle so that in appropriate scintillators pulses originating from alpha particles and neutrons are longer than those originating from beta particles and gamma radiation. These differences allow different species of ionizing particles to be distinguished by pulse shape discrimination.

So far pulse shape discrimination in liquid scintillation counting has been performed mainly by three different methods based on analog techniques: (a) measurement of the amplitude of some late portion of the scintillation pulse relative to its total amplitude; (b) measurement of the time required for a single pulse to reach a specific fraction of its total integrated value; (c) measurement of the time for a doubly differentiated anode or dynode pulse to reach its zero amplitude crossing point. Though usable in specially constructed instruments these methods are electronically complicated and difficult to incorporate into conventional liquid scintillation coincidence counters.

DISCLOSURE OF INVENTION

The principal object of the invention is to provide a cheap and easily adoptable alternative for analog pulse shape discrimination in liquid scintillation counting.

This is attained by the method according to the invention mainly by counting the number of said pulses during at least one predetermined time interval within each detected scintillation event and discriminating the events on the basis of said numbers by comparing either each number or a value determined from a function depending on this number, with a plurality of predetermined ranges of numbers or function values describing said different kinds of scintillation events.

The principle of the invention is as follows: When a scintillation event is detected, i.e. a coincidence is registered, photon pulses belonging to the same scintillation event are counted from individual photo- muliplier tubes for a specific interval of time, typically hundreds of nanoseconds. For longer scintilla- tions, alpha particles and neutrons, the obtained number of photon pulses is greater than for shorter ones, beta particles and gamma radiation, a fact that can be used as a basis of discrimination.

The obtained photon pulses originate from the trailing portion of the scintillation event. Because of this and the fact that photon counting is digital in nature, the method according to the invention is termed digital pulse decay discrimination (DPDD) to distinguish it from analog pulse shape discrimination.

BRIEF DESCRIPTION OF THE DRAWINGS

Fig. 1 exemplifies qualitatively intensities of liquid scintillation events as a function of time with different ionizing particles.

Fig. 2 is a block diagram of an embodiment of the invention to perform digital pulse decay discrimination in liquid scintillation coincidence counting.

DESCRIPTION OF PREFERRED EMBODIMENTS

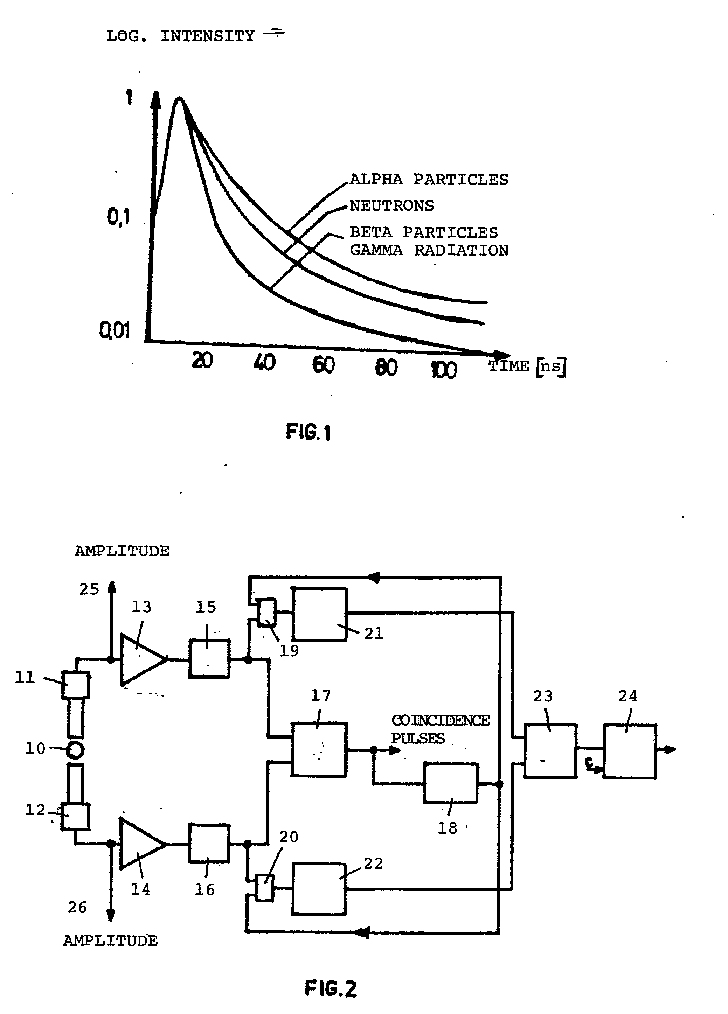

Fig. 2 shows an embodiment for digital pulse decay discrimination in conventional liquid scintillation coincidence counting.

A sample 10 is counted in a measuring chamber between two photomultiplier tubes 11 and 12. After amplification by means of preamplifiers 13 and 14 the pulses from the photomultiplier tubes 11 and 12 are supplied to

amplitude discriminators 15 and 16. These produce at their outputs a standardized logic pulse every time the incoming pulse exceeds a preset amplitude threshold that should be set low enough for every photoelectron pulse originating from a single photon to be accepted. Output pulses from the discriminators 15 and 16 are supplied to a coincidence circuit 17 that produces a so called coincidence pulse if the output pulses from the discriminators 15 and 16 arrive separated from each other by less than a predetermined time interval. The so called coincidence resolving time usually amounts to about 20 ns. The leading edge of the coincidence pulse is used to trigger a timing circuit 18 to open gates 19 and 20 for a predetermined time, the gating period.

The starting point and length of the gating period are chosen according to typical scintillation time scales shown in Fig. 1. As can be seen from Fig. 1 most of the scintillation photons are emitted in the very beginning of the scintillation event and this is, then, the instant the coincidence pulse is most likely to occur. A suitable starting point for the gating period is some tens of nanoseconds, typically about 50 ns, after the beginning of the coincidence pulse, and the length is chosen to some hundreds of nanoseconds, typically about 500-1000 ns.

Thus, after the coincidence pulse the gates 19 and 20 are opened for the gating period enabling fast counters 21 and 22 to count photon pulses from the discriminators 15 and 16. The total number of photon pulses obtained in the gating period is obtained from a summing circuit 23. This total number is henceforth renamed as the number of shape counts.

The most essential part of the method according to the invention is to obtain the number of shape counts using the photon counting technique described above. There are many ways of utilizing the number of shape counts. In Fig. 2 one simple embodiment is shown in which a digital comparator 24 compares the number of shape counts with a preset value C. The coincidence pulse is accepted if the number of shape counts is greater than, equal to or less than C depending on the type of particle under investigation. The optimum value of C is empirically determined.

According to a more versatile embodiment, the number of shape counts accompanying the coincidence pulse, is connected with pulse amplitudes (branches 25 and 26 in Fig. 2), resulting e.g. in so called dual parameter representation. In this technique, the amplitude of the pulse serves as one coordinate and its corresponding number of shape counts as the other, i.e. the amplitude and the number of shape counts are presented as a function of each other, enabling a very efficient discrimination between different types of particles.

There are techniques employing only a single photomultiplier tube looking at the sample, especially in alpha particle counting, Amplitude discrimination is used to eliminate thermal background in photomultiplier tubes. Obviously, DPDD can also be used in these cases: after a pulse is detected, photon counting is performed during the gating period via another discriminator having a lower threshold to accept single photon pulses.

It is easy to calculate that thermal background noise in photomultiplier tubes does not interfere in DPDD. Typical background count rates are some hundreds per second so that the probability of obtaining a shape count of thermal origin during a gating period having a length of e.g. about one microsecond, is smaller than $10^{-3}$ and thus negligible.

Typical numbers of shape counts are some tens for alpha particles and about one third thereof for beta particles with the same amplitudes. Naturally, these figures can vary according to the sample composition, the quality of the detecting system, and the speed of the electronics, mainly the counters 21 and 22. With the circuitry of Fig. 2 measurements relating to alpha particle counting have shown that e.g. in the amplitude region of alpha particles from $^{241}$Am, beta pulses from $^{36}$Cl can be reduced by a factor of at least several tens with only a minimal ($\sim$5%) loss in alpha particle counting efficiency.

Various troublesome phenomena such as static electricity and radioluminescence in materials of the measuring chamber can be discriminated by using DPDD provided that their pulse shapes differ from those under investigation.

The above embodiments are just for illustrative purposes, and no unnecessary limiting conclusions should be drawn therefrom. Consequently, there are many possible circuit configurations which can be employed within the scope of this invention. For example, any photodetector capable of producing detectable pulses originating from single photons can be used instead of photomultiplier tubes.

CLAIMS

1.  Method in liquid scintillation counting for discriminating between different kinds of detected scintillation events, each event producing a plurality of successive single photon and multiphoton pulses, characterized by counting the number of said pulses during at least one predetermined time interval within each detected scintillation event and discriminating the events on the basis of said numbers by comparing either each number or a value determined from a function depending on this number, with a plurality of predetermined ranges of numbers or function values describing said different kinds of scintillation events.

2.  Method according to claim 1, characterized in that said function is dependent on said number and the amplitude of the detected scintillation event.

0203901

LOG. INTENSITY ⇌

ALPHA PARTICLES
NEUTRONS
BETA PARTICLES
GAMMA RADIATION

1

0,1

0,01

20   40   60   80   100   TIME [ns]

**FIG.1**

AMPLITUDE

**FIG.2**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | FR-A1-2 316 609 (JOHN EDWARD NOAKES) <br> - - - | | G 01 T 1/204 |
| A | US-A-3 167 654 (L. SCOTT) <br> - - - | | |
| A | US-A-3 560 744 (PIERRE JORDAN) <br> - - - | | |
| A | US-A-3 626 187 (BARTON H. LANEY) <br> - - - | | |
| A | US-A-3 772 512 (LANEY) <br> - - - | | |

TECHNICAL FIELDS SEARCHED (Int. Cl. ³)

G 01 T

The present search report has been drawn up for all claims

| Place of search | Date of completion of the search | Examiner |
|---|---|---|
| STOCKHOLM | 15-08-1986 | FENGER-KROG S. |